Europäisches Patentamt

European Patent Office

Office européen des brevets

Veröffentlichungsnummer: **0 216 997 B1**

# EUROPÄISCHE PATENTSCHRIFT

Veröffentlichungstag der Patentschrift: **18.09.91**

Int. Cl.⁵ **A01B 15/14, A01B 15/20**

Anmeldenummer: **86108048.9**

Anmeldetag: **12.06.86**

Die Akte enthält technische Angaben, die nach dem Eingang der Anmeldung eingereicht wurden und die nicht in dieser Patentschrift enthalten sind.

Drehpflug.

Priorität: 26.09.85 DE 8527480 U

Veröffentlichungstag der Anmeldung:
08.04.87 Patentblatt 87/15

Bekanntmachung des Hinweises auf die Patenterteilung:
18.09.91 Patentblatt 91/38

Benannte Vertragsstaaten:
**DE FR GB NL**

Entgegenhaltungen:
**EP-A- 0 094 551**
**DE-A- 3 201 736**
**DE-U- 8 527 480**
**FR-A- 2 401 597**
**US-A- 4 415 040**

Patentinhaber: **H. Niemeyer Söhne GmbH & Co. KG**
**Heinrich-Niemeyer-Strasse 52**
**W-4446 Hörstel-Riesenbeck(DE)**

Erfinder: **Barlage, Bruno, Dipl.-Ing.**
**Beethovenstrasse 13**
**W-4446 Hörstel(DE)**
Erfinder: **Laumann, Bernhard**
**Lindenstrasse 6**
**W-4446 Hörstel(DE)**

Vertreter: **Busse & Busse Patentanwälte**
**Postfach 1226 Grosshandelsring 6**
**W-4500 Osnabrück(DE)**

**Beschreibung**

Die Erfindung bezieht sich auf einen Drehpflug in einer Ausbildung gemäß dem Oberbegriff des Anspruchs 1.

Bei einem bekannten Drehpflug dieser Art (EP-A-0 094 551) ist die Lenkerstange als in ihrer wirksamen Länge veränderbare Gewindespindel ausgebildet, die bei stillstehendem Drehpflug von Hand verstellbar ist. Diese Verstellmöglichkeit dient zur Einstellung des Abstandes zwischen den Anschlußpunkten, der die Arbeitsbreite des Drehpflugs im Pflugbetrieb bestimmt.

Bei einem als Anhänge- bzw. Beetpflug ausgebildeten Pflug (DE-C-28 38 829) mit einem mit einem Zugfahrzeug verbindbaren Anbaugestell, einem an diesem angelenkten Zugarm und einem mit diesem schwenkbar verbundenen Pflugrahmen ist es bekannt, durch einen hydraulischen Stellantrieb den vom Zugarm und vom Pflugrahmen eingeschlossenen Winkel einzustellen. Der hydraulische Stellantrieb ist zur schnellen Winkelverstellung fernbedienbar.

Der Erfindung liegt die Aufgabe zugrunde, einen Drehpflug der eingangs genannten Art mit einer während des Pflugbetriebs schnellverstellbaren Arbeitsbreite zu schaffen. Die Erfindung löst diese Aufgabe durch einen Drehpflug mit den Merkmalen des Anspruchs 1. Hinsichtlich wesentlicher weiterer Ausgestaltungen wird auf die Ansprüche 2 bis 9 verwiesen.

Der erfindungsgemäße Drehpflug ermöglicht während des Pflugbetriebes eine Veränderung der Pflugeinstellung und damit eine ausgleichende Anpassung der Arbeitsbreite an Bodenverhältnisse, bei denen bei konstanter Pflugeinstellung sonst Änderungen der Arbeitsbreite im Boden auftreten würden. Dies ist beispielsweise bei Neigungswechseln im Bodenverlauf, wie sie bei kopiertem Gelände vorliegen, sowie sonstigen Wechseln der Bodenverhältnisse der Fall und hat Ausbiegungen im Furchenverlauf zur Folge, die mit dem erfindungsgemäßen Pflug vermeidbar sind. Die Lenkerstange des Drehpfluges nach der Erfindung bildet eine Baueinheit mit drei Funktionen. Neben einer einfachen präzisen Grundeinstellung ist eine Schnellanpassung der Arbeitsbreite an Bodenverhältnisse möglich, so daß auch in Geländedeformationen mit wechselnden Quer- und/oder Längsneigungen die vom Drehpflug gezogene Furche stets einen geraden Verlauf erhält, und zum dritten ist eine Verstellbarkeit der Schwenklage des Pflugrahmens beim Drehen durchführbar, durch die eine zusätzliche Verbesserung der Bodenfreiheit bei diesem Vorgang erzielt ist.

Ein Ausführungsbeispiel des Gegenstands der Erfindung ist in der Zeichnung näher veranschaulicht. Im einzelnen zeigen:

Fig. 1 eine im rückwärtigen Bereich abgebrochene schematische Draufsicht auf einen Drehpflug nach der Erfindung,

Fig. 2 einen Schnitt nach der Linie II-II in Fig. 1,

Fig. 3 eine perspektivische Ansicht des Vorderbereiches des Drehpflugs nach Fig. 1 und 2, und

Fig. 4 eine teilweise geschnittene Einzeldarstellung der Lenkerstange mit Hydraulikzylinder samt schematischer Darstellung der Druckmittelzuleitungen und der in diesen angeordneten Steuerorgane.

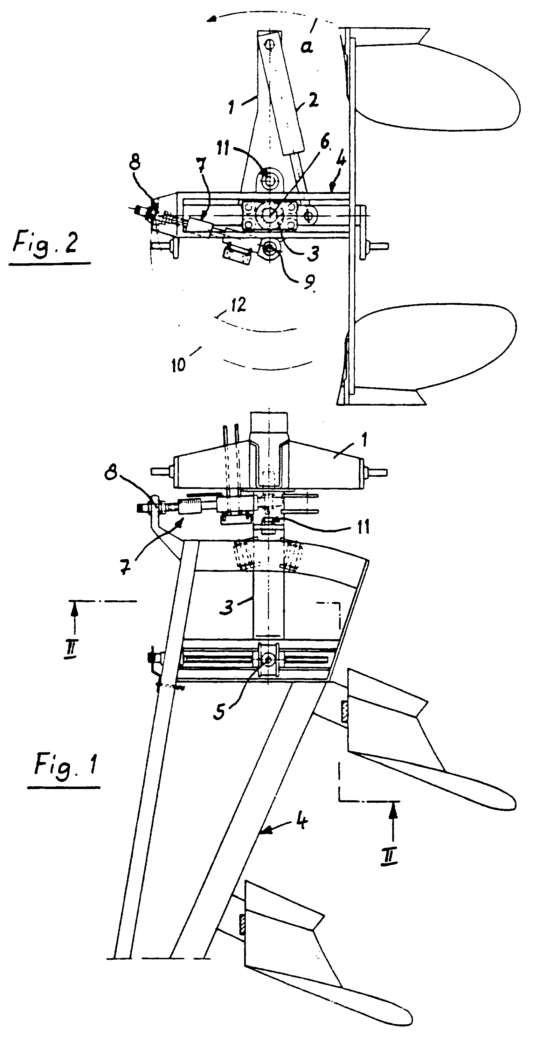

Der in der Zeichnung veranschaulichte Drehpflug besteht aus einem mit der Dreipunkt-Hydraulik oder einem ähnlichen Kraftheber eines landwirtschaftlichen Schleppers od.dgl. Zugfahrzeugs verbindbaren Anbaugestell 1, einer in einem Lager dieses Anbaugestells 1 schwenkbar gelagerten und mittels einer Antriebsvorrichtung 2, z.B. einem Hydraulikzylinder, aus einer ersten Arbeitsstellung gemäß Fig. 1 und 2 um etwa 180° in eine zweite Arbeitsstellung über Kopf drehbaren Wendewelle 3 und einem Pflugrahmen 4, der mit der Wendewelle 3 um eine in den Arbeitsstellungen etwa lotrechte Gelenkachse 5 schwenkbar verbunden ist, sich in seinem vorderen Bereich und im Bereich der Gelenkachse 5 auf der Wendewelle abstützt, einen in den Arbeitsstellungen etwa in Höhe der Mittelachse 6 der Wendewelle 3 gelegenen Schwerpunkt aufweist und beim Drehen der Wendewelle 3 jeweils mit seiner in Fig. 1 und 2 rechts dargestellten Pflugkörperseite über die Wendewelle 3 hinwegdreht. Zwischen dem Anbaugestell 1 und dem Pflugrahmen 4 ist vor dessen vorderen Bereich ein Lenker 7 zwischengeordnet, der drehgelenkig mit einem Anschlußpunkt 8 am Pflugrahmen 4 und ebenfalls drehgelenkig mit einem vertikal im Abstand unter der Mittelachse 6 der Wendewelle 3 am Anbaugestell 1 angeordneten Anschlußpunkt 9 verbunden ist.

Bei Vorliegen der Verbindung der Anschlußpunkte 8,9 durch den Lenker 7 bewegt sich der Anschlußpunkt 8 auf einer Kurvenbahn 10, die um die Exzentrizität des Anschlußpunktes 9 gegenüber der Mittelachse 6 der Wendewelle 3 abwärts verschoben ist und ein Schwenken des Pflugrahmens 4 um dessen Gelenkachse 5 bewirkt, wenn über den Antrieb 2 der Pflugrahmen 4 mit den Pflugscharen über Kopf in Richtung des Pfeiles a (Fig. 2) aus seiner dargestellten Arbeitsstellung in eine andere Arbeitsstellung (oder umgekehrt) gedreht wird. Auf der Wendewelle 3 ist ein weiterer Anschlußpunkt 11 angebracht, der die Möglichkeit eröffnet, den Lenker 7 statt mit dem Anschlußpunkt 9 mit diesem Anschlußpunkt 11 zu verbinden. In diesem Falle bewegt sich der Anschlußpunkt 8 auf einer Kurvenbahn 12, die konzentrisch zur Mittelachse 6 der Wendewelle 3 verläuft. Dementsprechend erfährt der Pflugrahmen 4 bei Pflugdrehungen keinerlei Schwenkverlagerung relativ zur Wendewelle 3. Der Abstand zwischen dem Anschlußpunkt 8 und entweder dem Anschlußpunkt 9 oder dem Anschlußpunkt 11 bestimmt die Arbeitsbreite des Pfluges in seinen beiden Arbeitsstellungen, und der Lenker 7 umfaßt eine längeneinstellbare Lenkerstange 13, deren Teile 14,15 gegenseitig schraubverstellbar sind, sowie einen Hydraulikzylinder 16, dessen Kolbenstange 17 an ihrem freien Ende mit dem Teil 15 der Lenkerstange 13 fest verbunden ist. An ihrem gegenüberliegenden Ende trägt die Kolbenstange 17 einen zum Zylinderrohr 18 hin abgedichteten Kolben 19, der im Zylinderrohr zwei Zylinderräume 20,21 abteilt. In den Zylinderraum 20 mündet eine Druckmittelzuleitung 22 und in den Zylinderraum 21 eine Druckmittelzuleitung 23 ein.

Der Hydraulikzylinder 16 ist mit einer Verriegelungsvorrichtung vorgesehen, mittels der die Kolbenstange 17 samt Kolben 19 gegen axiale Bewegungen im Zylinderrohr 18 sicherbar ist. Diese Verriegelungsvorrichtung kann jede beliebige konstruktive Gestaltung aufweisen und z.B. mechanisch ausgeführt und zwischen Kolbenstange 17 und Zylinderrohr 18 angeordnet sein. Eine solche Verriegelung ist zweckmäßig hydraulisch entriegelbar, und zwar in Abhängigkeit von der Druckbeaufschlagung sowohl des einen als auch des anderen Zylinderraumes 20 bzw. 21.

Bei dem dargestellten Ausführungsbeispiel ist eine Verriegelungsvorrichtung 24 vorgesehen, die ein Gehäuse 25 und in in diesem vorgesehenen Durchgangskanälen 26,27 angeordnete Rückschlagventile 28,29 umfaßt. Die Verriegelungsvorrichtung 24 ist derart an die Druckmittelzuleitungen 22,23 angeschlossen,daß die Durchgangskanäle 26,27 ein Teilstück der Druckmittelzuleitung 22 bzw. 23 bilden. Interne Kanäle 30,31 im Gehäuse 25 verbinden den Durchgangskanal 27 mit dem Rückschlagventil 28 bzw. den Durchlaßkanal 26 mit dem Rückschlagventil 29, so daß bei Druckbeaufschlagung sowohl der Druckmittelzuleitung 22 als auch der Druckmittelzuleitung 23 stets beide Rückschlagventile 28,29 öffnen. Wird die Druckbeaufschlagung einer Druckmittelzuleitung 22 oder 23 unterbrochen, schließen beide Rückschlagventile 28,29 mit der Folge, daß die Kolbenstange 17 samt Kolben 19 im Zylinderrohr 18 hydraulisch verriegelt ist.

Zur Steuerung der Druckbeaufschlagung der Druckmittelzuleitungen 22,23 kann ein Steuerventil 32 vorgesehen sein, das im Bedienungsbereich des Fahrers des den Drehpflug tragenden landwirtschaftlichen Schleppers od.dgl. Zugfahrzeugs angeordnet ist. In den Druckmittelzuleitungen 22,23 können ferner Drosselventile 33,34 angeordnet sein, die bevorzugt stufenlos einstellbar sind und die Möglichkeit eröffnen, die Arbeitsgeschwindigkeit des Hydraulikzylinders 16 sowohl in der einen, als auch in der anderen Bewegungsrichtung zu regulieren.

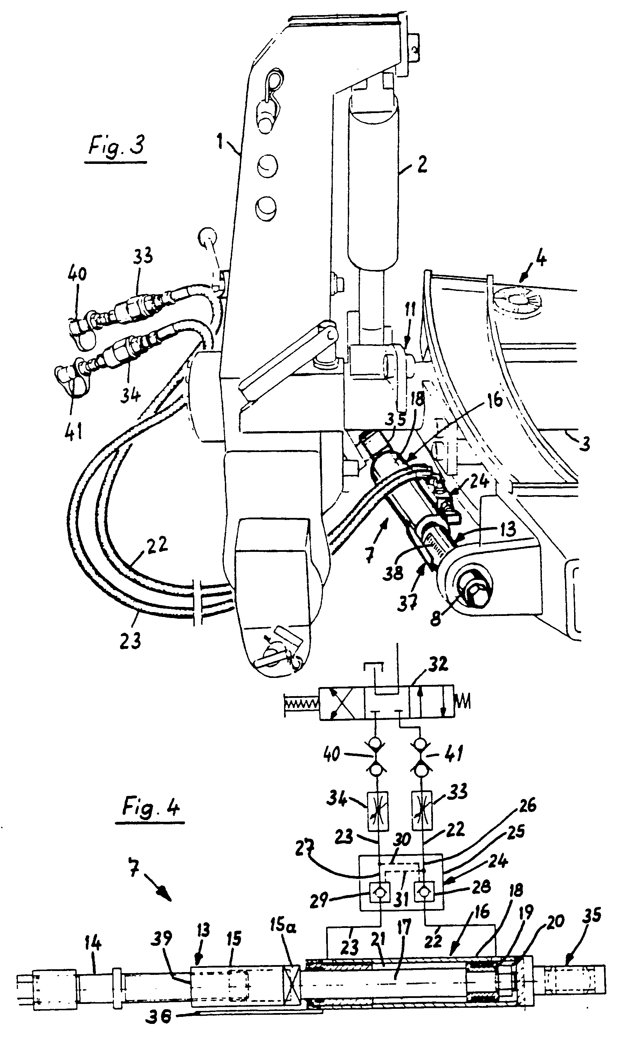

Die Verriegelungsvorrichtung 24 kann, wie dies die Fig. 3 veranschaulicht, unmittelbar mit dem Zylinderrohr 18 verbunden sein, dessen der Lenker-stange 13 abgewandtes Ende ein Anschlußauge 35 für eine Verbindung des Lenkers 7 mit dem Anschlußpunkt 7 bzw. 11 aufweist.

Am Zylinderrohr 18 des Hydraulikzylinders 16 ist ein Zeigerfortsatz 36 befestigt, der Teil einer Anzeigevorrichtung 37 bildet, die ferner auf dem Teil 15 der Lenkerstange 13 angebrachte Rastkerben 38 umfaßt. Diese Anzeigevorrichtung 37 ermöglicht es, die Auszugslänge des Hydraulikzylinders 16 abzulesen, z.B. in einer Betriebspause und bei eingerückter Verriegelungsvorrichtung 24. Eine weitere Anzeigevorrichtung kann zwischen den Teilen 14,15 der Lenkerstange 13 vorgesehen sein, die von Markierungskerben auf dem Teil 14 und von der Stirnfläche 39 des Teils 15 gebildet ist. Der Zeigerfortsatz 36 bildet zugleich einen Anschlag für eine Verdrehsicherung 15a für die Lenkerstange 13, die an dem der Kolbenstange 17 zugewandten Ende des Teils 15 angebracht und von einem senkrecht zur Zeichnungsebene über den Umfang des Teils 15 überstehenden Vorsprung gebildet ist.

Die Grundeinstellung der Arbeitsbreite des Drehpfluges erfolgt durch Schraubverstellung der Teile 14,15 der Lenkerstange 13 zueinander bei entweder vollständig oder bis zu einer vorgegebenen Zwischenstellung in das Zylinderrohr 18 eingefahrener Kolbenstange 17. Veränderungen der Arbeitsbreite des Drehpflugs während des Pflugbetriebes erfolgen dann durch den Schlepperfahrer in Abhängigkeit von den Geländegegebenheiten nur noch mit Hilfe des Hydraulikzylinders 16. Durch vorübergehende Vergrößerung (oder auch Verringerung) der Grundarbeitsbreite kann sichergestellt werden, daß auch in Geländeformationen mit wechselnden Quer- und/oder Längsneigungen die vom Drehpflug gezogene Furche einen stets geraden Verlauf erhält und von unerwünschten Ausbiegungen frei ist.

Um sicherzustellen, daß bei Drehbewegungen des Pflugrahmens 4 die sich entsprechend den Verlagerungen des Lenkers 7 mitbewegenden Druckmittelzuleitungen 22,23 keine Beschädigungen erfahren, sind die Druckmittelzuleitungen 22,23 an der Unterseite des Anbaugestells 1 entlanggeführt und dort zweckmäßig abgestützt. Die Druckmittelzuleitungen 22,23 enden zweckmäßig in Schlauchkupplungen 40,41 mittels denen sie an einen Druckerzeuger, insbesondere die Dreipunkthydraulik eines landwirtschaftlichen Schleppers, anschließbar sind, dem auch das Steuerventil 32 zugeordnet ist.

Anstelle eines Hydraulikzylinders kann auch ein anderer Stellantrieb, z.B. ein Druckmittelmotor mit umkehrbarer Drehrichtung, vorgesehen sein, der eine Teleskopspindel betätigt. Ein Hydraulikzylinder als Stellantrieb ist jedoch besonders bevorzugt, weil er mit einfachen Mitteln eine hohe Ansprechgeschwindigkeit gewährleistet.

## Patentansprüche

1. Drehpflug mit einem mit der Dreipunkthydraulik eines landwirtschaftlichen Zugfahrzeugs verbindbaren Anbaugestell (1), einer in einem Lager des Anbaugestells (1) schwenkbar gelagerten und mittels einer Antriebsvorrichtung (2) aus einer ersten Arbeitsstellung in eine zweite Arbeitsstellung drehbaren Wendewelle (3), einem Pflugrahmen (4), der mit der Wendewelle (3) um eine in den Arbeitsstellungen etwa lotrechte Gelenkachse (5) schwenkbar verbunden ist und sich in seinem Vorderbereich und im Bereich der Gelenkachse (5) über Führungen auf der Wendewelle (3) abstützt, und einer zwischen Anschlußpunkten (8;9,11) am Anbaugestell (1) oder an der Wendewelle (3) und am Vorderbereich des Pflugrahmens (4) angeordneten Lenkerstange (13), die zur Einstellung des Abstandes zwischen den Anschlußpunkten (8;9,11) durch gegenseitige Schraubverstellung ihrer Teile (14,15) in ihrer wirksamen Länge veränderbar ist, **dadurch gekennzeichnet,** daß die Lenkerstange (13) zur Schnellverstellung des Abstandes zwischen den Anschlußpunkten (8;9,11) mit einem fernbetätigbaren Stellantrieb (16) zu einem im Pflugbetrieb verstellbaren Lenker (7) vereinigt ist.

2. Drehpflug nach Anspruch 1, **dadurch gekennzeichnet,** daß der Stellantrieb als doppelseitig beaufschlagbarer Druckmittel-, insbesondere Hydraulikzylinder, ausgebildet ist.

3. Drehpflug nach Anspruch 1, **dadurch gekennzeichnet,** daß der Hydraulikzylinder (16) koaxial zur Lenkerstange (13) und in Verlängerung eines Endes der Lenkerstange angeordnet ist.

4. Drehpflug nach einem der Ansprüche 1 bis 3, **dadurch gekennzeichnet,** daß der Stellantrieb (16) mit einer Verriegelungsvorrichtung (24) versehen ist.

5. Drehpflug nach Anspruch 4, **dadurch gekennzeichnet,** daß die Verriegelungsvorrichtung (24) in beide Druckmittelzuleitungen (22,23) zum Hydraulikzylinder (16) angeordnete Rückschlagventile (28,29) aufweist.

6. Drehpflug nach einem der Ansprüche 2 bis 5, **dadurch gekennzeichnet,** daß in beiden Druckmittelzuleitungen (22,23) zum Hydraulikzylinder (16) stufenlos einstellbare Drosselventile (33,34) angeordnet sind.

7. Drehpflug nach einem oder mehreren der Ansprüche 2 bis 6, **dadurch gekennzeichnet,** daß die beiden Druckmittelzuleitungen (22,23) zum Hydraulikzylinder (16) an der Unterseite des Anbaugestells (1) entlanggeführt sind.

8. Drehpflug nach einem oder mehreren der Ansprüche 1 bis 7, **gekennzeichnet durch** eine Anzeigevorrichtung (37;39) für die Längeneinstellung des Lenkers (7).

9. Drehpflug nach einem oder mehreren der Ansprüche 1 bis 8, **dadurch gekennzeichnet,** daß die Lenkerstange (13) eine an deren Teil (15) angeordnete Verdrehsicherung (15a) aufweist, die einem Anschlag (36) am Zylinderrohr (18) des Hydraulikzylinders (16) gegenüberliegt.

## Claims

1. A reversible plough comprising a mounting frame (1) adapted to be connected to the three-point hydraulic system of an agricultural tractor vehicle, a reversing shaft (3) rotatable out of a first working position into a second working position, a plough frame (4) which together with the reversing shaft (3) is connected to pivot about an articulation axis (5) which is substantially vertical in the working positions and which in its front portion and in the region of the articulating axis (5) is supported on the reversing shaft (3) through guides, and a radius rod (13) disposed between the connection points (8; 9, 11) on the mounting frame (1) or on the reversing shaft (3) and on the front portion of the plough frame (4) and which for adjustment of the distance between the connection points (8; 9, 11), can be altered in its effective length by a reciprocal screwed adjustment of its parts (14, 15), characterised in that for rapid adjustment of the distance between the connection points (8; 9, 11), the radius rod (13) is combined with a remotely operable positioning drive (16) to form a link (7) which is adjustable when the plough is in operation.

EP 0 216 997 B1

2. A reversible plough according to Claim 1, characterised in that the positioning drive is constructed as a pressurised medium, particularly hydraulic cylinder, which can be operated from either end.

3. A reversible plough according to Claim 1, characterised in that the hydraulic cylinder (16) is coaxial with the radius rod (13) and is disposed in an extension of one end thereof.

4. A reversible plough according to one of Claims 1 to 3, characterised in that the positioning drive (16) is provided with a locking device (24).

5. A reversible plough according to Claim 4, characterised in that the locking device (24) comprises non-return valves (20, 29) which are disposed in both pressurised medium feed lines (22, 23) to the hydraulic cylinder (16).

6. A reversible plough according to one of Claims 2 to 5, characterised in that infinitely variable throttle valves (33, 34) are disposed in both pressurised medium feed lines (22, 23) to the hydraulic cylinder (16).

7. A reversible plough according to one or more of Claims 2 to 6, characterised in that the two pressurised medium feed lines (22, 23) to the hydraulic cylinder (16) are extended along the underside of the mounting frame (1).

8. A reversible plough according to one or more of Claims 1 to 7, characterised by a device (37, 39) which indicates the length adjustment of the link (7).

9. A reversible plough according to one or more of Claims 1 to 8, characterised in that the radius rod (13) has disposed on a part (15) a rotation-preventing device (15a) disposed opposite an abutment (36) on the cylindrical tube (18) of the hydraulic cylinder (16).

**Revendications**

1. Charrue réversible comportant un châssis porteur (1) reliable à un raccordement trois point hydraulique d'un véhicule de traction agricole, un arbre inverseur (3) monté pivotable dans un palier du châssis (1) et pouvant tourner au moyen d'un dispositif de commande (2) à partir d'une première position de travail dans une deuxième position de travail, un bâti de charrue (4), qui est lié à l'arbre inverseur (3) avec pivotement possible sur un axe d'articulation (5) sensiblement perpendiculaire aux positions de travail et qui s'appuie dans sa zone avant et dans la zone de l'axe d'articulation (5) sur des guides de l'arbre inverseur (3), et une barre directrice (13) disposée entre des points de jonction (8; 9; 11) sur le châssis (1) ou sur l'arbre inverseur (3) et sur la zone antérieure du bâti de charrue (4), barre qui peut être modifiée dans sa longueur utile par réglage de la distance entre les points de jonction (8; 9; 11) par déplacement par vis commune de ses pièces (14, 15), caractérisée en ce que la barre directrice (13) est raccordée à un réglage rapide de la distance entre les points de jonction (8; 9; 11) par un servo-moteur (16) commandable à distance et agissant sur une bielle (7) réglable pendant l'opération de labour.

2. Charrue selon la revendication 1, caractérisée en ce que le servo-moteur est réalisé par un vérin pour agent de pression alimentable des deux côtés, en particulier vérin hydraulique.

3. Charrue selon la revendication 1, caractérisée en ce que le vérin hydraulique (16) est placé coaxialement à la barre directrice (13) et en prolongement d'une extrémité de la barre directrice.

4. Charrue selon une des revendications 1 à 3, caractérisée en ce que le servo-moteur (16) est muni d'un dispositif de verrouillage (24).

5. Charrue selon la revendication 4, caractérisée en ce que le dispositif de verrouillage (24) comporte, dans les deux conduites d'alimentation d'agent de pression (22, 23) vers le vérin hydraulique (16), des soupapes anti-retour (28, 29).

6. Charrue selon une des revendications 2 à 5, caractérisée en ce que, dans les deux conduites d'alimentation d'agent de pression (22, 23) au vérin hydraulique (16), sont disposées des soupapes d'étranglement réglables à action progressive (33, 34).

7. Charrue selon une ou plusieurs des revendications 2 à 6, caractérisée en ce que les deux conduites d'agent de pression (22, 23) vers le vérin hydraulique (16) sont passées le long du côté inférieur du châssis (1).

8. Charrue selon une ou plusieurs des revendications 1 à 7, caractérisée par un dispositif indicateur (37, 39) du réglage en longueur de la bielle (7).

9. Charrue selon une ou plusieurs des revendications 1 à 8, caractérisée en ce que la barre directrice (13) comporte un dispositif de sécurité contre le pivotement (15a) sur la pièce (15), situé en face d'une butée (36) fixée au tube (18) du vérin hydraulique (16).

Fig. 2

Fig. 1

Fig. 3

Fig. 4